# EUROPÄISCHE PATENTSCHRIFT

(11) **EP 2 963 365 B1**
(45) Veröffentlichungstag und Bekanntmachung des Hinweises auf die Patenterteilung: **04.04.2018**
(21) Anmeldenummer: 15002004.8
(22) Anmeldetag: 03.07.2015
(51) Int. Cl.: F25D 23/06

(54) **ISOLIERGEHÄUSE UND VERFAHREN ZUR HERSTELLUNG EINES ISOLIERGEHÄUSES**
INSULATING HOUSING AND METHOD FOR PRODUCING AN INSULATING HOUSING
BOÎTIER ISOLANT ET PROCÉDÉ DE FABRICATION D'UN BOÎTIER ISOLANT

(30) Priorität: 03.07.2014 DE 102014109332
(43) Veröffentlichungstag der Anmeldung: 06.01.2016
(73) Patentinhaber: König Metall GmbH & Co. KG, 76571 Gaggenau (DE); Kerspe, Jobst H., 69256 Mauer (DE)
(72) Erfinder: Kerspe, Jobst H., 69256 Mauer (DE); Fischer, Michael, 76571 Gaggenau (DE)
(74) Vertreter: Geitz Truckenmüller Lucht Christ

(56) Entgegenhaltungen:
- WO-A1-03/052312
- JP-A- H0 719 392
- JP-A- 2008 196 572
- US-A1- 2005 076 585
- US-A1- 2013 221 011

## Beschreibung

Die Erfindung betrifft ein Isoliergehäuse mit einer Doppelwandung, umfassend eine Innenwandung und eine davon beabstandete Außenwandung, wobei der vakuumdicht ausgebildete Zwischenraum zwischen der Innen- und Außenwandung mit einem porösen, vorzugsweise mikro- oder nanoporösen, Füllmaterial gefüllt ist und zur Ausbildung eines zumindest leichten Vakuums evakuiert ist, wobei das Isoliergehäuse im Rahmen der Herstellung zunächst als zusammenhängendes planes Flächenelement ausgebildet ist, wobei der Übergangsbereich zwischen den einzelnen Wandungselementen als Einkerbung ausgebildet ist, deren Basis jeweils durch eine Biegelinie definiert ist, wobei dann die Raumform des Isoliergehäuses derart herstellbar ist, dass die einzelnen Wandungselemente derart um die jeweiligen Biegelinien verschwenkt und aufgerichtet werden, dass das Isoliergehäuse zumindest weitgehend geschlossen ist und in einem letzten Schritt die Wandungselemente an den sich im Bereich angrenzender Wandungselemente ergebenden Stoßstellen dauerhaft miteinander verbunden werden, wobei das zusammenhängende plane Flächenelement die Wandungselemente, ein Bodenelement , ein Deckenelement, eine Rückwand, sowie eine erste und eine zweite Seitenwand umfasst, wobei die einzelnen Elemente jeweils doppelwandig ausgebildet sind, jeweils umfassend eine Innenwandung und eine Außenwandung , zwischen denen ein Füllraum angeordnet ist.

Ein solches Isoliergehäuse ist bereits aus der JP H07 19392 A vorbekannt. Die genannte japanische Patentanmeldung betrifft ein Verfahren zur Herstellung einer vakuumisolierten Füllwand, die zunächst in einer Abwicklung hergestellt wird, wobei zwischen den einzelnen Wandabschnitten der vorbekannten Füllwand Einkerbung vorgesehen sind, die dazu eingesetzt werden, die einzelnen Wandabschnitte im Bereich der Einkerbung derart umzuklappen, sich anschließend zu einer zumindest weit gehend geschlossenen Raumform bestimmungsgemäß ergänzen.

Im Übrigen sind aus der US 2013/221011 A1, vakuumisolierte Paneelen, ein Kühlschrank, umfassend derartige Paneelen und ein Verfahren zur Herstellung dieser Paneelen, die in der Wandung des Kühlschrankes zur Verbesserung von dessen Isolationseigenschaften angeordnet sein können, vorbekannt. Dabei sind die entsprechenden Isolationspaneelen mit einer Einkerbung versehen, so dass die Paneelen um diese Einkerbung herum so verschwenkt werden können, dass sie auch in einer abgewinkelten Raumform innerhalb der Wandung eines Kühlschrankgehäuses angeordnet sein können.

Aus der DE 43 11 510 A1 ist ferner ein Isoliergehäuse vorbekannt, bei dem jeweils aus einem planen faltbaren Panel, jeweils umfassend eine Bodenplatte, 2 Seitenwände, eine Rückwand und ein Deckenelement ein kleineres Innengehäuse und eine größeres Außengehäuse zu einer geschlossenen Raumform aufgerichtet. Anschließend wird das kleinere Innengehäuse in das Außengehäuse eingebracht und der Zwischenraum mit einem weiteren vorgefertigten faltbaren Panel aus zwischen gasdichten Kunststoff-Folien eingebrachtem Pulver verfüllt. Anschließend liegen diese mit Pulver gefüllten Kunststoffelemente zwischen dem Innen und Außengehäuse und sollen in dieser bestimmungsgemäßen Position mit den angrenzenden Wandungen verklebt werden. Erst dann erfolgt eine Evakuierung es Gehäuses, wodurch erst die Gesamtfertigkeit der Anordnung hergestellt ist.

Ein weiteres Isoliergehäuse ist aus der EP 0 990 406 A2 vorbekannt. Im Einzelnen handelt es sich bei dem vorbekannten Isoliergehäuse um ein großflächiges Isoliergehäuse für Hausgeräte wie etwa Kühlschränke, Gefriertruhen & Warmwasserspeicher. Derartige Gehäuse sind herkömmlich mit einer zwischenliegenden Kunststoff-Schaum-Isolierung ausgeführt. Im Interesse einer effizienteren Wärmedämmung zur Verringerung des Energieverbrauchs werden allerdings zunehmend Wärmedämmungen mit einer verbesserten Wirksamkeit verlangt. Bei gleichbleibender oder zumindest akzeptabler Isolierdicke können diesbezügliche Verbesserungen nur mit evakuierten Dämmungen erreicht werden. In diesem Zusammenhang sind Lösungsvorschläge bekannt geworden, bei denen die Kühlgeräte-Gehäuse mit vorgefertigten, in sich vakuumisolierten Platten, sogenannten Vakuum-Isolationspanels (VIPs) bestückt werden und die noch verbleibenden Zwischenräume ausgeschäumt werden. Auch diese Lösung hat sich inzwischen als einigermaßen unbefriedigend erwiesen, weil zum einen durch die Vielzahl von unterschiedlichen Komponenten, Materialien und Baugruppen hohe Fertigungskosten entstehen. Darüber hinaus bewirkt die Ausschäumung der Zwischenräume, dass im Ergebnis die unterschiedlichen Materialien miteinander mehr oder minder irreversibel verklebt werden, so dass ein späteres Recycling oder eine Verwertung der Kühlschrankgehäuse nach Ablauf der Lebensdauer so gut wie unmöglich ist. In der Regel müssen die Gehäuse vollständig als Sondermüll entsorgt werden. Darüber hinaus enthalten die Ummantelungen der Vakuum-Isolationspanels (VIP's) zu deren Aussteifung metallische Anteile, so dass zumindest im Bereich der Fuge, also in den Bereichen wo die VIPs aneinander stoßen, Wärmebrücken ausgebildet werden und somit in diesem Bereich die Konvektion ermöglichen und damit den Isolationseffekt herabsetzen.

In diesem Zusammenhang ist es aus der EP 0 990 406 A2 bekannt, im Falle eines doppelwandigen, vakuumdichten Gehäuses eines Kühlschranks, den Zwischenraum zwischen der Innen- und der Außenwandung mit einer gestützten Vakuumisolierung auszufüllen, wobei der Stützkörper aus einer rieselfähigen (granulat- oder pulverförmigen) Siliziumoxidverbindung besteht, wobei sich vorzugsweise bei der Siliziumoxidverbindung um ein Schaumgranulat handelt. Im Übrigen ist der Zwischenraum auf einen Restgasdruck p<10¹ mbar evakuiert.

Unabhängig hiervon ist aus der WO 01/18316 A1 ein Dämmformkörper und ein Verfahren zu dessen Herstellung vorbekannt. Im Einzelnen handelt es sich hierbei um einen als Wärmedämmplatte ausgestalteten Dämmformkörper mit einer verpressten Isolationsschicht aus mikroporösem Isolationsmaterial der biegbar ist und sich deshalb an den isolierenden Untergrund insbesondere Rohre, vornehmlich Heizungsrohre, anschmiegt. Dies wird dadurch erreicht, dass zumindest die Isolationsschicht an ihrer Breitseite nutförmige Einprägungen aufweist, die entlang einer Biegelinie ausgerichtet sind. Die Einprägungen gestatten es, den zunächst planen Dämmformkörper um ein Heizungsrohr herumzulegen und abschließend mit einer Umhüllung zu umgeben.

Ausgehend von diesem Stand der Technik liegt der Erfindung die Aufgabe zu Grunde, ein Isoliergehäuse mit zumindest vergleichbaren Isoliereigenschaften zu schaffen, das hinsichtlich seiner Herstellung, Lagerung sowie bezüglich des Transportes des Isoliergehäuses gegenüber dem Stand der Technik Vorteile bietet, sowie ein Verfahren zur Herstellung dieses Isoliergehäuses anzugeben.

Die Lösung dieser Aufgabe gelingt durch ein Isoliergehäuse mit den Merkmalen des geltenden Anspruchs 1 sowie durch ein Verfahren gemäß Anspruch 10. Vorteilhafte Ausgestaltungen des erfindungsgemäßen Isoliergehäuses können den abhängigen Ansprüche 2 bis 9 entnommen werden.

Die Besonderheit des erfindungsgemäßen Isoliergehäuses besteht darin, dass das Isoliergehäuse zunächst als planes Flächenelement, umfassend die einzelnen Wandungselemente des Isoliergehäuses ausgebildet ist und die Übergangsbereiche zwischen den einzelnen Wandungselementen als Einkerbungen ausgeformt sind, deren Basis jeweils durch eine Biegelinie definiert ist. Im Weiteren kann dann die dreidimensionale Raumform des Isoliergehäuses einfach dadurch hergestellt werden, dass die einzelnen Wandungselemente um ein Boden-Wandelement herum aufgerichtet werden und hierbei um die Biegelinien verschwenkt werden, bis eine zumindest weitgehend geschlossene Raumform hergestellt ist und anschließend die Wandelemente an den jeweiligen Stoßstellen der angrenzenden Wandelemente dauerhaft miteinander verbunden werden.Der Erfindung liegt also der überraschende Gedanke zu Grunde, zunächst nicht ein fertiges Isoliergehäuse, sondern vielmehr ein Zwischenprodukt herzustellen, bei dem es sich um ein zusammenhängendes planes Flächenelement, umfassend die einzelnen Wandungselemente des Isoliergehäuses handelt. Dieses plane Flächenelement kann dann mit wesentlich geringerem Platzbedarf in einfacher Weise gestapelt und gelagert werden und erforderlichenfalls mit einem deutlich reduzierten Platzbedarf transportiert werden. Erst in einem letzten Fertigungsschritt werden dann die einzelnen Wandungselemente im Bereich der Biegelinien verschwenkt und hierdurch die dreidimensionale Raumform des Isoliergehäuses aufgerichtet und anschließend die einzelnen Wandungselemente in dieser Position dauerhaft fixiert werden. Dabei ist das Füllmaterial des Zwischenraumes zwischen der Innen- und der Außenwandung derart ausgebildet, dass es eine stützende Funktion besitzt. Somit wird auch beim Gegenstand der Erfindung eine gestützte Vakuumisolierung realisiert. Dabei hält das Füllmaterial die Außen- und Innenwandung aufgrund seiner stützenden Wirkung auch in der endgültigen Raumform des Isoliergehäuses auf einem definierten Abstand und stellt daher auch in diesem Bereich eine Isolierwirkung, wenn auch ggf. reduziert, sicher. Dabei ist der Übergangsbereich zwischen den einzelnen Wandungselementen des Isoliergehäuses derart ausgebildet, dass die Innenwandung so vorgeformt ist, dass diese eine umlaufende Außenumfangsphase des planen Flächenelementes ausbildet. Dieie vorstehend bereist erwähnte Übergangsmembran ist mit Vorteil deutlich dünnwandiger ausgebildet als die die Innen- und Außenwandung. Die Reduzierung der Wandungsstärke kann beispielsweise durch einen entsprechenden Umformungsprozess oder durch den Einsatz sogenannter "Tailored Blanks", die in unterschiedlichen Blechstärken vorgefertigt sind, erreicht werden.

Als Füllmaterial für den Zwischenraum zwischen der Innen- und der Außenwandung eignet sich besonders ein mineralischer Werkstoff mit niedriger Festkörper-Wärmeleitfähigkeit bei gleichzeitig geringer Ausgasung, der überdies eine feinporige Struktur aufweisen sollte. Alternativ kann auch ein offenzelliger anorganischer Schaum eingesetzt werden. Als Füllmaterial eignet sich auch eine pyrogene Kieselsäure. Die derzeit bevorzugte Ausführung sieht jedoch ein Füllmaterial aus hochverdichteten Glasfasern vor.

Die Außenwandung des erfindungsgemäßen Isoliergehäuses wird bevorzugt aus einem hochwertigen Edelstahl hergestellt, das die erforderliche Formtreue und Korrosionsfestigkeit besitzt.

Auch die Innenwandung, die üblicherweise deutlich dünnwandiger ausgebildet ist, sollte aus Gründen der Korrosionsfestigkeit ein Edelstahlblech sein.

In vorteilhafter Weiterbildung wird dann diese Übergangsmembran im Bereich der Außenumfangsphase des planen Flächenelementes mit der Außenwandung vakuumdicht umlaufend verschweißt.

Dabei kann die jeweilige Schweißnaht zur Verbindung der Übergangsmembran mit der Außenwandung durch eine einfach zu realisierende Rollnaht oder Laserschweißnaht realisiert werden.

Nachdem auf diesem Weg die in dem planen Flächenelement miteinander verbundenen einzelnen Wandelemente vakuumdicht verschweißt sind, wird dieses zusammenhängende Flächenelement evakuiert bis vorzugsweise ein Restgasdruck von p≤0,1 mbar erreicht wird. Im Weiteren handelt es sich dann um eine gestützte Vakuumisolierung, die bekanntlich einen sehr hohen Wärmedämmeffekt besitzt und eine denkbare Konvektion weitgehend und dauerhaft unterbindet.

Nachdem alle Wandelemente dementsprechend evakuiert sind, besteht ein zum Transport oder zur Lagerung geeignetes vollständig funktionsfähiges Isoliergehäuse allerdings noch als planes Flächenelement bereit. Schließlich können dann in einem letzten Fertigungsschritt vorzugsweise kurz vor Auslieferung des Isoliergehäuses an den Endkunden bzw. an den Handel die planen Flächenelemente zu ihrer Raumform aufgerichtet werden und dauerhaft zusätzliche mechanische Verbindungselemente, etwa durch außenseitige, die jeweiligen Stoßflächen der jeweils beteiligten Wandelemente übergreifende Blechlaschen, die mittels Schrauben fixiert werden, oder durch geeignete Klebenähte, dauerhaft miteinander verbunden werden.

Alternativ wird die erfindungsgemäße Aufgabe mit den Merkmalen des Verfahrensanspruchs 10 gelöst.

Die Erfindung wird nachstehend anhand eines in der Zeichnung nur schematisch dargestellten Ausführungsbeispiels näher erläutert.

Es zeigen:
- Figur 1:: ein planes Flächenelement aus miteinander verbundenen Wandelementen eines Isoliergehäuses in einer perspektivischen Ansicht,
- Figur 2:: ein in Figur 1 mit AA bezeichnetes Detail des planen Flächenelementes in einer Querschnittsansicht und
- Figur 3:: das plane Flächenelement gemäß Figur 1 nach Aufrichtung der Wandelemente in der Raumform des Isoliergehäuses in einer Frontansicht

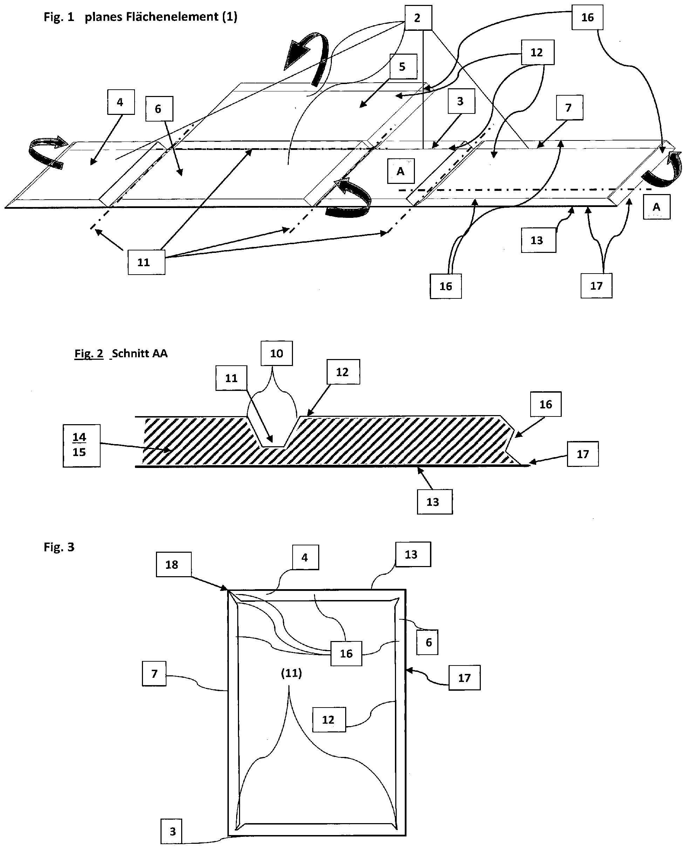

Figur 1 zeigt ein planes Flächenelement 1 mit aneinander angrenzenden Wandungselementen 2 eines in der Zeichnung nicht weiter dargestellten, weitgehend geschlossenen Isoliergehäuses. Dabei besteht das plane Flächenelement 1 im Einzelnen aus folgenden Wandungselementen 2, einem Bodenelement 3, einem Deckenelement 4, einer Rückwand 5 sowie einer ersten und zweiten Seitenwand 6 und 7. Dabei sind die einzelnen Wandungselemente 2 mit den jeweils angrenzenden Wandungselementen 2 durch einen Übergangsbereich miteinander verbunden, der im Wesentlichen die Form einer Einkerbung 10 besitzt, wobei die entsprechende Einkerbung nicht zwingend dreieckförmig ausgebildet sein muss, sondern gegebenenfalls auch die Form eines U- oder eines Trogprofils aufweisen kann, also beispielsweise auch nutförmig ausgebildet sein kann. Der Scheitelpunkt der Einkerbung 10 wird jeweils im Weiteren als eine gedachte Biegelinie 11 angesehen. Die einzelnen Wandungselemente 2 selbst sind jeweils doppelwandig ausgebildet, bestehen also aus einer Innenwandung 12 und einer Außenwandung 13, zwischen denen ein Füllraum 14 angeordnet ist.

Gemäß der Schnittdarstellung in Figur 2 handelt es sich bei der Außenwandung 13 um ein Edelstahlaußenblech, das vorzugsweise eine Blechdicke zwischen 0,5 und 0,8 mm besitzt. Auch die Innenwandung 12 ist als Edelstahlblech ausgebildet, aber deutlich dünnwandiger, etwa mit einer Blechdicke unter 0,5 mm. Zwischen der Innenwandung 12 und der Außenwandung 13 befindet sich der Füllraum 14, der mit einem isolierenden Füllmaterial gefüllt ist, das zugleich eine stützende Funktion besitzt. Diese Stützfunktion hält die Innen- und Außenwandung 12 und 13 auch im Bereich der Einkerbungen 10 auf Abstand. In dem hier vorliegenden Ausführungsbeispiel handelt es sich bei dem Füllstoff 15 um hochverdichtete Glasfasern. Dabei ist davon auszugehen, dass sämtliche Wandungselemente 2 des planen Flächenelementes 1 analog ausgebildet sind.

Dabei zeigt die Detailansicht in Figur 2 den zwischen den angrenzenden Wandungselementen 2 ausgebildeten Übergangsbereich in einer Schnittansicht. Demnach ist an die dünnwandige Innenwandung 12 eine die Stirnseite des jeweiligen Wandungselementes 2 überdeckende Übergangsmembran 16 derart angeformt, dass sie eine das plane Flächenelement 1 umgreifende umlaufende Außenumfangsphase ausbildet. Im Ergebnis stellt also die Übergangsmembran 16 eine die Wandung dieser Außenumfangsphase ausbildende Verlängerung der Innenwandung 12 dar. Dabei ist die Übergangsmembran 16 etwa durch einen zusätzlichen Umformungsprozess deutlich dünner ausgebildet als die Innenwandung 12.

Die Übergangsmembran 16 ist mit der Außenwandung 13 vakuumdicht verschweißt. Die entsprechende Schweißnaht kann handwerklich vergleichsweise einfach als Linienschweißnaht das plane Flächenelement, 1 insgesamt umlaufend aufgebracht werden. Alternativ kann anstelle der Schweißnaht an dieser Stelle auch eine Klebeverbindung oder eine mechanische Verbindung, etwa durch Bördelung vorgesehen werden. Nachdem sämtliche miteinander verbundenen Wandungselemente 2 vakuumdicht dementsprechend verschlossen sind, erfolgt eine Evakuierung des Füllraums 14 des zusammenhängenden planen Flächenelementes 1 insgesamt, bis zu einem Restgasdruck p≤0,1 mbar, wobei hierdurch der Isolationseffekt der Wandungselemente 2 und damit des Isoliergehäuses insgesamt noch einmal deutlich verstärkt wird.

Das insoweit fertiggestellte plane Flächenelement 1 kann dann in dieser abgewickelten Form platzsparend gelagert oder transportiert werden.

Üblicherweise erst kurz vor der Auslieferung an den Endkunden oder an den Handel werden dann in einem letzten Fertigungsschritt die einzelnen Wandungselemente 2 gemäß den in Figur 1 eingetragenen Pfeilen um die eingezeichneten Biegelinien 11 aufgerichtet bzw. umgekantet und somit ein weitgehend geschlossenes Isoliergehäuse erzeugt, das in dieser Raumform dadurch fixiert wird, dass in den Übergangsbereichen, die durch die Einkerbungen 10 markiert sind, innen- und/oder außenseitig geeignete Verbindungselemente, etwa die Verbindungsfläche übergreifende Laschen, aufgebracht und z. B. durch Befestigungsschrauben gesichert werden und hierdurch die Wandungselemente 2 in der dreidimensionalen Raumform des Isoliergehäuses fixiert werden. Nach der Aufrichtung des planen Flächenelementes 1 gemäß Figur 1 in seine endgültige Raumform gemäß Figur 3 entsteht ein vollständiges Isoliergehäuse, etwa für einen Kühlschrank oder eine Tiefkühltruhe, mit Ausnahme der Kühlschranktür, die etwa nach Einbringen des Innenlebens in das Isoliergehäuse an dem der Rückwand abgewandten Rahmen des Isoliergehäuses einseitig verschwenkbar angelenkt wird. Dabei ist üblicherweise die Kühlschranktür ebenfalls mit einer analogen gestützten Vakuumisolierung, wie die übrigen Wandlungselemente 2, versehen.

Dabei können mit der gleichen Technik nicht nur Kühlschrank- oder Gefriertruhengehäuse, sondern auch ganze Kühlräume aus derartigen Flächenelementen zusammengesetzt werden. Im Automotivebereich bietet sich diese Technik für den Aufbau von Batteriegehäusen oder zur Motorkapselung an. Im Apparatebau können mit dieser Technik Ofenmuffeln oder Wämespeicher realisiert werden.

### BEZUGSZEICHENLISTE

- 1: Flächenelement
- 2: Wandungselement
- 3: Bodenelement
- 4: Deckenelement
- 5: Rückwand
- 6: erste Seitenwand
- 7: zweite Seitenwand
- 10: Einkerbung
- 11: Biegelinie
- 12: Innenwandung
- 13: Außenwandung
- 14: Füllraum
- 15: Füllstoff
- 16: Übergangsmembran
- 17: Schweißnaht
- 18: Stoßstelle

## Patentansprüche

1. Isoliergehäuse mit einer Doppelwandung, umfassend eine Innenwandung (12) und eine davon beabstandete Außenwandung (13), wobei der vakuumdicht ausgebildete Zwischenraum zwischen der Innen- und Außenwandung (12, 13) mit einem porösen, vorzugsweise mikro- oder nanoporösen, Füllmaterial (15) gefüllt ist und zur Ausbildung eines zumindest leichten Vakuums evakuiert ist, wobei
das Isoliergehäuse im Rahmen der Herstellung zunächst als zusammenhängendes planes Flächenelement (1) ausgebildet ist, wobei der Übergangsbereich zwischen den einzelnen Wandungselementen (2) als Einkerbung (10) ausgebildet ist, deren Basis jeweils durch eine Biegelinie (11) definiert ist, wobei dann die Raumform des Isoliergehäuses derart herstellbar ist, dass die einzelnen Wandungselemente (2) derart um die jeweiligen Biegelinien (11) verschwenkt und aufgerichtet werden, dass das Isoliergehäuse zumindest weitgehend geschlossen ist und in einem letzten Schritt die Wandungselemente (2) an den sich im Bereich angrenzender Wandungselemente (2) ergebenden Stoßstellen (18) dauerhaft miteinander verbunden werden, wobei das zusammenhängende plane Flächenelement (1) die Wandungselemente (2), ein Bodenelement (3), ein Deckenelement (4), eine Rückwand (5), sowie eine erste und eine zweite Seitenwand (6 und 7) umfasst, wobei die einzelnen Elemente (2 - 7) jeweils doppelwandig ausgebildet sind, jeweils umfassend eine Innenwandung (12) und eine Außenwandung (13), zwischen denen ein Füllraum (14) angeordnet ist, **dadurch gekennzeichnet, dass** die Innenwandung (12) jeweils deutlich dünnwandiger ausgebildet ist als die Außenwandung (13) und ein, vorzugsweise dünnwandiges, Edelstahlblech ist, wobei die Innenwandung (12) so ausgeformt ist, dass diese in eine an die Innenwandung (2) anschließende Übergangsmembran (16) übergeht, die eine umlaufende Außenumfangsphase des planen Flächenelementes (1) ausbildet und wobei diese Übergangsmembran (16) signifikant dünnwandiger ausgebildet ist als die Innenwandung (12) und die Außenwandung (13), wobei das Füllmaterial (15) in dem Zwischenraum zwischen der Innen- und Außenwandung (12, 13) zusätzlich eine stützende Funktion derart besitzt, dass die Innenwandung (12) und die Außenwandung (13) auch im Bereich der Einkerbungen 10 auf Abstand gehalten sind.

2. Isoliergehäuse nach Anspruch 1, **dadurch gekennzeichnet, dass** das Füllmaterial (15) ein mineralischer Werkstoff mit niedriger Festkörper-Wärmeleitfähigkeit, geringer Ausgasung mit feinporiger Struktur ist oder ein offenzelliger anorganischer Schaum, insbesondere aus hochverdichteten Glasfasern, ist.

3. Isoliergehäuse nach einem oder mehreren der vorhergehenden Ansprüche, **dadurch gekennzeichnet, dass** die Außenwandung (13) aus Edelstahl gefertigt ist.

4. Isoliergehäuse nach einem oder mehreren der vorhergehenden Ansprüche, **dadurch gekennzeichnet, dass** die Übergangsmembran (16) mit der Außenwandung (13) umlaufend, das heißt innen- und außenseitig, vakuumdicht verschweißt oder sonstig durch eine Klebenahtverklebt oder mittels einer mechanischen Verbindung, etwa durch Bördelung, vakuumdicht mit der Außenwandung (13) verbunden ist

5. Isoliergehäuse nach Anspruch 4, **dadurch gekennzeichnet, dass** die Schweißnaht (17) zur Verbindung der Übergangsmembran (16) mit der Außenwandung (13) eine Rollnaht- oder Laserschweißnaht ist.

6. Isoliergehäuse nach einem oder mehreren der vorhergehenden Ansprüche, **dadurch gekennzeichnet, dass** das plane Flächenelement (1) nach der umlaufenden vakuumdichten Verschweißung der Übergangsmembran (16) mit der Außenwand (13) evakuiert ist, vorzugsweise auf einen Restgasdruck p≤0,1 mbar.

7. Isoliergehäuse nach einem oder mehreren der vorhergehenden Ansprüche, **dadurch gekennzeichnet dass** die Aufrichtung des Isoliergehäuses aus dem planen Flächenelement (1) zu seiner Raumform nach Evakuierung des planen Flächenelementes (1) erfolgt.

8. Isoliergehäuse nach Anspruch 7, **dadurch gekennzeichnet, dass** das Isoliergehäuse in seiner endgültigen Raumform mittels geeigneter, jeweils die Stoßstellen (18) übergreifender mechanischer Verbindungselemente, etwa mittels verschraubter Blechlaschen, und/oder Klebung fixierbar ist.

9. Verfahren zur Herstellung eines Isoliergehäuses mit folgenden Schritten:
- Herstellung eines planen Flächenelementes (1) miteinander verbundener Wandungselemente (2), wobei der Übergangsbereich zwischen den einzelnen Wandelungselementen (2) durch Einkerbungen (10) ausgebildet wird, wobei das Flächeelement die Wandungselemente (2), ein Bodenelement (3), ein Deckenelement (4), eine Rückwand (5), sowie eine erste und eine zweite Seitenwand (6 und 7) umfasst,
- die die Biegelinien (11) für ein späteres Aufrichten des planen Flächenelementes (1) zu einer Raumform vorgeben,
- wobei die einzelnen Wandelungselemente (2) jeweils eine Innen- und eine Außenwandung (12, 13) umfassen, zwischen denen ein vakuumdichter Zwischenraum ausgebildet ist, wobei die Innenwandung (12) jeweils deutlich dünnwandiger ausgebildet ist als die Außenwandung (13),
- der mit einem porösen Füllmaterial (15) gefüllt ist, vorzugsweise mit hochverdichteten Glasfasern,
- wobei die Innenwandung (12) so ausgeformt wird, dass diese in eine an die Innenwandung (2) anschließende Übergangsmembran (16) übergeht, die eine umlaufende Außenumfangsphase des planen Flächenelementes (1) ausbildet,
- wobei diese Übergangsmembran (16) jeweils mit der Außenwandung (13) vakuumdicht umlaufend verschweißt wird,
- anschließend das plane Flächenelement (1) evakuiert wird
- und anschließend die Wandungselemente (2) derart um ein Boden-Wandungselement (3) aufgerichtet werden, dass ein zumindest weitgehend geschlossenes dreidimensionales Isoliergehäuse ausgebildet ist
- und schließlich im Bereich der Stoßstellen (18) der Wandungselemente (2) jeweils mittels geeigneter mechanischer Verbindungselemente und/oder Klebung in der endgültigen Raumform fixiert wird, **dadurch gekennzeichnet, dass,**
- die Innenwandung (12) jeweils deutlich dünnwandiger ausgebildet wird als die Außenwandung (13),
- wobei die Innenwandung (12) so ausgeformt wird, dass diese in eine an die Innenwandung (2) anschließende Übergangsmembran (16) übergeht, die eine umlaufende Außenumfangsphase des planen Flächenelementes (1) ausbildet und
- wobei diese Übergangsmembran (16) signifikant dünnwandiger ausgebildet wird als die Innenwandung (12) und die Außenwandung (13),
- wobei das Füllmaterial (15) in dem Zwischenraum zwischen der Innen- und Außenwandung (12, 13) zusätzlich eine stützende Funktion derart besitzt, dass die Innenwandung (12) und die Außenwandung (13) auch im Bereich der Einkerbungen 10 auf Abstand gehalten sind.

## Claims

1. Insulating housing with a double wall, comprising an inner wall (12) and an outer wall (13) spaced therefrom, wherein the intermediate space formed in a vacuum-tight manner between the inner and outer walls (12, 13) is filled with a porous, preferably microporous or nanoporous, filling material (15) and is evacuated to form an at least slight vacuum, wherein
the insulating housing is initially formed in production as a contiguous planar surface element (1), wherein the transition region between the individual wall elements (2) is formed as a notch (10), the base of which is defined in each case by a bending line (11), wherein the spatial shape of the insulating housing can then be produced such that the individual wall elements (2) are pivoted and set upright about the respective bending lines (11) such that the insulating housing is at least substantially closed, and in one last step the wall elements (2) are permanently connected to each other at the abutment points (18) resulting at the wall elements (2) which adjoin in the region, wherein the contiguous planar surface element (1) comprises the wall elements (2), a base element (3), a ceiling element (4), a rear wall (5), and a first and a second side wall (6 and 7), wherein the individual elements (2-7) are each designed in a double-walled manner, each comprising an inner wall (12) and an outer wall (13), between which a filling space (14) is arranged, **characterized in that** the inner wall (12) is formed in each case with significantly thinner walls than the outer wall (13) and is a, preferably thin-walled, stainless steel sheet, wherein the inner wall (12) is formed so that it converges into a transition membrane (16) which adjoins the inner wall (2) and which forms a circumferential outer peripheral phase of the planar surface element (1), and wherein said transition membrane (16) is formed with significantly thinner walls than the inner wall (12) and the outer wall (13), wherein the filling material (15) in the intermediate space between the inner and outer walls (12, 13) additionally has a supporting function such that the inner wall (12) and the outer wall (13) are kept at a distance even in the region of the notches (10).

2. Insulating housing according to claim 1, **characterized in that** the filling material (15) is a mineral material with low solid-state thermal conductivity, low outgassing with a fine-pored structure or an open-celled inorganic foam, in particular of highly compressed glass fibers.

3. Insulating housing according to one or more of the preceding claims, **characterized in that** the outer wall (13) is made of stainless steel.

4. Insulating housing according to one or more of the preceding claims, **characterized in that** the transition membrane (16) is circumferentially welded in a vacuum-tight manner to the outer wall (13), i.e. internally and externally, or is glued otherwise thereto by an adhesive seam, or is connected in a vacuum-tight manner to the outer wall (13) by means of a mechanical connection, such as by crimping.

5. Insulating housing according to claim 4, **characterized in that** the weld seam (17) for connecting the transition membrane (16) to the outer wall (13) is a rolled seam or laser weld seam.

6. Insulating housing according to one or more of the preceding claims, **characterized in that** the planar surface element (1) is evacuated after the circumferential vacuum-tight welding of the transition membrane (16) to the outer wall (13), preferably to a residual gas pressure p≤0.1 mbar.

7. Insulating housing according to one or more of the preceding claims, **characterized in that** the uprighting of the insulating housing from the planar surface element (1) to its spatial form takes place after evacuation of the planar surface element (1).

8. Insulating housing according to claim 7, **characterized in that** the insulating housing in its final spatial form is fixable by means of suitable mechanical connecting elements, which in each case engage beyond the abutment points (18), such as by means of bolted sheet metal tabs, and/or by gluing.

9. Method for producing an insulating housing with the following steps:
- production of a planar surface element (1) of interconnected wall elements (2), wherein the transition region between the individual wall elements (2) is formed by notches (10), wherein the surface element comprises the wall elements (2), a base element (3), a ceiling element (4), a rear wall (5), and a first and a second side wall (6 and 7),
- which predetermine the bending lines (11) for a later uprighting of the planar surface element (1) to a spatial form,
- wherein the individual wall elements (2) each comprise an inner wall and an outer wall (12, 13), between which a vacuum-tight intermediate space is formed, wherein the inner wall (12) is formed in each case with a significantly thinner wall than the outer wall (13),
- which is filled with a porous filling material (15), preferably with highly compressed glass fibers,
- wherein the inner wall (12) is formed such that it converges into a transition membrane (16) which adjoins the inner wall (2) and forms a circumferential outer peripheral phase of the planar surface element (1), and
- wherein this transition membrane (16) is welded in each case circumferentially in a vacuum-tight manner to the outer wall (13),
- then the planar surface element (1) is evacuated
- and subsequently the wall elements (2) are set upright around a base wall element (3) such that an at least substantially closed three-dimensional insulating housing is formed
- and is finally fixed in the region of the abutment points (18) of the wall elements (2) in each case in the final spatial form by means of suitable mechanical connecting elements and/or gluing, **characterized in that**
- the inner wall (12) is formed in each case with significantly thinner walls than the outer wall (13),
- wherein the inner wall (12) is formed such that it converges into a transition membrane (16) adjoining the inner wall (2), which forms a circumferential outer peripheral phase of the planar surface element (1) and
- wherein this transition membrane (16) is formed with significantly thinner walls than the inner wall (12) and the outer wall (13),
- wherein the filling material (15) in the intermediate space between the inner and outer walls (12,13) additionally has a supporting function such that the inner wall (12) and the outer wall (13) are kept at a distance also in the region of the notches (10).

## Revendications

1. Boîtier isolant doté d'une double paroi, comprenant une paroi intérieure (12) et une paroi extérieure (13) espacée de celle-ci, dans lequel l'espace étanche au vide formé entre les parois intérieure et extérieure (12, 13) est rempli d'un matériau de remplissage (15) poreux, de préférence micro- ou nanoporeux, et mis au vide pour créer un vide au moins léger, le boîtier isolant étant réalisé, dans le cadre de la fabrication, d'abord sous la forme d'un élément surfacique plan d'un seul tenant (1), la zone de transition entre les différents éléments de paroi (2) se présentant sous la forme d'une entaille (10) dont la base est chaque fois définie par une ligne de pliage (11), la forme spatiale du boîtier isolant pouvant être produite en faisant pivoter et en redressant les différents éléments de paroi (2) autour des lignes de pliage (11) respectives de telle sorte que le boîtier isolant soit au moins en grande partie fermé et, dans une dernière étape, en reliant entre eux de manière durable les éléments de paroi (2) aux points de jonction (18) qui en résultent dans la zone d'éléments de paroi (2) adjacents, l'élément surfacique plan d'un seul tenant (1) comprenant les éléments de paroi (2), un élément de plancher (3), un élément de plafond (4), une paroi arrière (5) ainsi qu'une première et une deuxième paroi latérale (6 et 7), les différents éléments (2 - 7) étant chacun réalisés à double paroi, comprenant chaque fois une paroi intérieure (12) et une paroi extérieure (13) entre lesquelles est disposé un espace de remplissage (14), **caractérisé en ce que** la paroi intérieure (12) est chaque réalisée avec une paroi nettement plus mince que la paroi extérieure (13) et est, de préférence, une tôle d'acier inoxydable à paroi mince, la paroi intérieure (12) étant formée de sorte à se prolonger par une membrane de transition (16) se raccordant à la paroi intérieure (2), qui forme une phase périphérique extérieure sur le pourtour de l'élément surfacique plan (1), et cette membrane de transition (16) étant réalisée avec une paroi significativement plus mince que la paroi intérieure (12) et la paroi extérieure (13), le matériau de remplissage (15) dans l'espace entre les parois intérieure et extérieure (12, 13) possédant en outre une fonction de support de telle sorte que la paroi intérieure (12) et la paroi extérieure (13) sont maintenues à distance également dans la zone des entailles (10).

2. Boîtier isolant selon la revendication 1, **caractérisé en ce que** le matériau de remplissage (15) est un matériau minéral à faible conductivité thermique solide, faible dégazage avec une structure à pores fins ou est une mousse inorganique à alvéoles ouvertes, en particulier en fibres de verre à haute densité.

3. Boîtier isolant selon l'une ou plusieurs des revendications précédentes, **caractérisé en ce que** la paroi extérieure (13) est réalisée en acier inoxydable.

4. Boîtier isolant selon l'une ou plusieurs des revendications précédentes, **caractérisé en ce que** la membrane de transition (16) est soudée de manière étanche au vide avec la paroi extérieure (13) sur tout le pourtour, c'est-à-dire du côté intérieur et extérieur, ou sinon collée par un cordon de colle ou reliée au moyen d'une liaison mécanique, par exemple par rabattement des bords, de manière étanche au vide à la paroi extérieure (13).

5. Boîtier isolant selon la revendication 4, **caractérisé en ce que** le cordon de soudure (17) servant à relier la membrane de transition (16) à la paroi extérieure (13) est un cordon de soudure à la molette ou au laser.

6. Boîtier isolant selon l'une ou plusieurs des revendications précédentes, **caractérisé en ce que** l'élément surfacique plan (1) est mis au vide, de préférence à une pression de gaz résiduelle p ≤ 0,1 mbar, après le soudage étanche au gaz périphérique de la membrane de transition (16) avec la paroi extérieure (13).

7. Boîtier isolant selon l'une ou plusieurs des revendications précédentes, **caractérisé en ce que** le redressement du boîtier isolant en sa forme spatiale à partir de l'élément surfacique plan (1) a lieu après la mise au vide de l'élément surfacique plan (1).

8. Boîtier isolant selon la revendication 7, **caractérisé en ce que** le boîtier isolant peut être fixé dans sa forme spatiale définitive au moyen d'éléments de liaison mécaniques adaptés, recouvrant chaque fois les points de jonction (18), par exemple au moyen de languettes en tôle vissées, et/ou par collage.

9. Procédé de fabrication d'un boîtier isolant, comprenant les étapes suivantes :
- fabrication d'un élément surfacique plan (1) d'éléments de paroi (2) reliés les uns aux autres, la zone de transition entre les différents éléments de paroi (2) étant formée par des entailles (10), l'élément surfacique comprenant les éléments de paroi (2), un élément de plancher (3), un élément de plafond (4), une paroi arrière (5) ainsi qu'une première et une deuxième paroi latérale (6 et 7),
- qui définissent les lignes de pliage (11) pour un redressement ultérieur de l'élément surfacique plan (1) en une forme spatiale,
- les différents éléments de paroi (2) comprenant chacun une paroi intérieure et une paroi extérieure (12, 13) entre lesquelles est formé un espace étanche au vide, la paroi intérieure (12) étant chaque fois réalisée avec une paroi nettement plus mince que la paroi extérieure (13),
- qui est rempli d'un matériau de remplissage (15) poreux, de préférence de fibres de verre à haute densité,
- la paroi intérieure (12) étant formée de sorte à se prolonger par une membrane de transition (16) se raccordant à la paroi intérieure (2), qui forme une phase périphérique extérieure sur le pourtour de l'élément surfacique plan (1),
- cette membrane de transition (16) étant soudée de manière étanche au vide avec la paroi extérieure (13) sur tout le pourtour,
- l'élément surfacique plan (1) étant ensuite mis au vide
- et les éléments de paroi (2) étant ensuite redressés autour d'un élément de paroi de plancher (3) de manière à former un boîtier isolant tridimensionnel au moins en grande partie fermé
- lequel est enfin fixé dans sa forme spatiale définitive au moyen d'éléments de liaison mécaniques adaptés et/ou par collage dans la zone des points de jonction (18) des éléments de paroi (2), **caractérisé en ce que**
- la paroi intérieure (12) est chaque réalisée avec une paroi nettement plus mince que la paroi extérieure (13),
- la paroi intérieure (12) étant formée de sorte à se prolonger par une membrane de transition (16) se raccordant à la paroi intérieure (2), qui forme une phase périphérique extérieure sur le pourtour de l'élément surfacique plan (1) et
- cette membrane de transition (16) étant réalisée avec une paroi significativement plus mince que la paroi intérieure (12) et la paroi extérieure (13),
- le matériau de remplissage (15) dans l'espace entre les parois intérieure et extérieure (12, 13) possédant en outre une fonction de support de telle sorte que la paroi intérieure (12) et la paroi extérieure (13) sont maintenues à distance également dans la zone des entailles (10).
